# EUROPEAN PATENT APPLICATION

(11) **EP 4 460 136 A1**
(43) Date of publication of application: **06.11.2024**
(21) Application number: 22914183.3
(22) Date of filing: 12.12.2022
(51) Int. Cl.: H04W 72/12

(54) **INFORMATION TRANSMISSION METHOD AND DEVICE, AND STORAGE MEDIUM**

(30) Priority: 31.12.2021 CN 202111673790
(71) Applicant: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); LU, Ting, Shenzhen, Guangdong 518057 (CN); TAN, Jie, Shenzhen, Guangdong 518057 (CN)
(74) Representative: Vossius & Partner Patentanwälte Rechtsanwälte mbB
(86) International application number: PCT/CN2022/138293
(87) International publication number: WO 2023/124928

(57) **Abstract**

The present application provides an information transmission method and device, and a storage medium. The information transmission method applied to a first communication node includes: receiving or determining a buffer size report related parameter used by a service to be transmitted; and reporting a buffer status report (BSR) based on the buffer size report related parameter.

## Description

### FIELD

The present application relates to the field of communications, and for example, to an information transmission method and device, and a storage medium.

### BACKGROUND

In a New Radio (NR) network, a service volume of uplink services is reported through a Buffer Status Report (BSR). When the service volume is reported through the BSR, a size identifier part of the service volume adopts 5bit or 8bit considering a resource overhead of a BSR Media Access Control-Control Element (MAC CE). However, a service cache of an NR terminal is relatively large, so that a value range of the service volume values is also relatively large, for example, from 0 to 81338368 bytes. It is difficult to accurately represent service volumes between 0 and 81338368 bytes using 5bit or 8bit. The service volume reported through the BSR is inaccurate, causing inaccurate resource scheduling by a base station and leading to a waste of radio resources.

### SUMMARY

Embodiments of the present application provide an information transmission method, including:
receiving or determining a buffer size report related parameter used by a service to be transmitted; and
reporting a buffer status report (BSR) based on the buffer size report related parameter.

The embodiments of the present application provide an information transmission method, applied to a second communication node, includes:
sending a pre-configured buffer size report related parameter to a first communication node; and
receiving a BSR reported by the first communication node based on the buffer size report related parameter.

The embodiments of the present application provide an information transmission device, including: a communication module, a memory, and one or more processors,
wherein the communication module is configured to perform communication interaction with other communication nodes;
the memory is configured to store one or more programs; and
the one or more programs, when run by the one or more processors, cause the one or more processors to implement the method described in any one of the above embodiments.

The embodiments of the present application provide a storage medium. The storage medium stores a computer program, and the computer program, when run by a processor, implements the method described in any one of the above embodiments.

### BRIEF DESCRIPTION OF THE DRAWINGS

FIG. 1 is a flowchart of an information transmission method according to an embodiment of the present application;
FIG. 2 is a flowchart of another information transmission method according to an embodiment of the present application;
FIG. 3 is a schematic diagram of configuration of a Short Buffer Status Report Medium Access Control-Control Element (Short BSR MAC CE) contained in the same Media Access Control Packet Data Unit (MAC PDU) or the same Transmission Time Interval (TTI);
FIG. 4 is a schematic diagram of configuration of a Long BSR MAC CE contained in the same MAC PDU or the same TTI;
FIG. 5 is a schematic diagram of configuration of a Long BSR MAC CE according to an embodiment of the present application;
FIG. 6 is a schematic diagram of configuration of another Long BSR MAC CE according to an embodiment of the present application;
FIG. 7 is a schematic diagram of configuration of still another Long BSR MAC CE according to an embodiment of the present application;
FIG. 8 is a structural block diagram of an information transmission apparatus according to an embodiment of the present application;
FIG. 9 is a structural block diagram of another information transmission apparatus according to an embodiment of the present application; and
FIG. 10 is a schematic structural diagram of an information transmission device according to an embodiment of the present application.

### DETAILED DESCRIPTION OF EMBODIMENTS

The embodiments of the present application will be described in detail below with reference to the accompanying drawings. The present application is described below in combination of the accompanying drawings of the embodiments. The examples are only used for explaining the present application, and are not intended to limit the scope of the present application.

Table 1 is a schematic table of values of a buffer size level table in a BSR provided according to an embodiment of the present application, and Table 2 is a schematic table of values of a buffer size level table in another BSR provided according to an embodiment of the present application. Table 1 explains a service volume value range of service volume size identifiers of 5bit, and Table 2 explains a service volume value range of service volume size identifiers of 8bit. As shown in Table 2, a difference between a buffer size value with index=200 and a buffer size value with index=201 is 188367 Bytes. Such a large difference causes inaccurate scheduling of base station resources.

**Table 1**

| Index | BS value | Index | BS value | Index | BS value | Index | BS value |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

**Table 2**

| Index | BS value | Index | BS value | Index | BS value | Index | BS value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

Therefore, how to achieve precise reporting of a service volume by a User Equipment (UE) is an urgent problem that needs to be solved. The embodiments of the present application provides an information transmission method that may selectively configure an indication of a used buffer size level table or determine a used buffer size level table according to a information feature of a service to be transmitted, or a plurality of buffer size values used, so that the UE can precisely report a service volume.

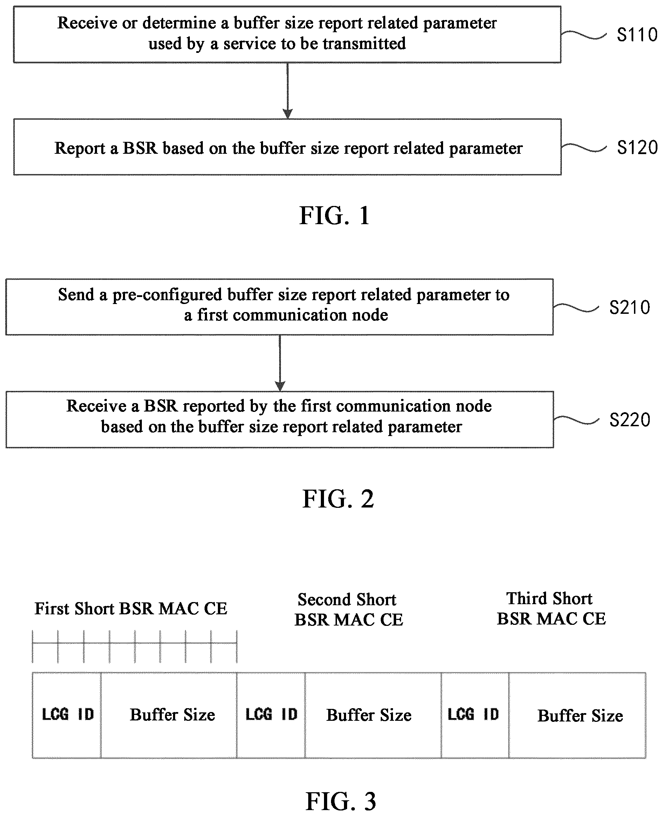

In an embodiment FIG. 1 is a flowchart of an information transmission method according to an embodiment of the present application. This embodiment may be performed by an information transmission device. The information transmission device may be a first communication node. Exemplarily, the first communication node is a terminal side (for example, UE). As shown in FIG. 1, this embodiment includes S110 to S120.

S 110. A buffer size report related parameter used by a service to be transmitted is received or determined.

S120. ABSR is reported based on the buffer size report related parameter.

In an embodiment, the buffer size report related parameter includes at least one of the following: an indication of a used buffer size level table, a BSR reporting type indication, a BSR format indication, and an indication of supporting a specific BSR reporting manner; the buffer size report related parameter is configured by a second communication node through a broadcasting signaling or a UE dedicated signaling. The indication of a used buffer size level table is used for indicating a buffer size level table to be used by the first communication node. The BSR reporting type indication is used for indicating a type or granularity of a BSR reporting value. The BSR format indication is used for indicating which Buffer Status Report Media Access Control-Control Element (BSR MAC CE) format to be used for the BSR reporting. The indication of supporting a specific BSR reporting manner is used for indicating whether the second communication node supports a predefined BSR reporting manner, such as, the same MAC PDU or the same TTI containing K BSR MAC CEs. K is a positive integer. In this embodiment, the second communication node configures, through the broadcasting signaling or UE dedicated signaling, the indication of the buffer size level table to be used by the first communication node, the BSR reporting type indication, the BSR format indication, or the indication of supporting a specific BSR reporting manner, so as to indicate the first communication node a buffer size reporting manner to be used. If the second communication node does not indicate to the first communication node, the first communication node uses Table 1 to report the BSR by default.

In an embodiment, before a buffer size report related parameter used by a service to be transmitted is received or determined, the method further includes: A service volume information feature corresponding to the service to be transmitted is indicated to a second communication node. The service volume information feature is used for characterizing an attribute of the service to be transmitted.

In an embodiment, the service volume information feature at least includes one of the following: a service volume value range; an application layer service type; a buffer size level table expected to be used; an expected BSR reporting type indication; and a BSR format indication expected to be used. In an embodiment, the application layer service type may include: an interactive small-rate service and a video streaming or file download service. In this embodiment, the buffer size level table expected to be used refers to one or more buffer size level tables that can be used by the first communication node. It can be understood that a plurality of buffer size level tables may be configured according to the application layer service type. Exemplarily, it is assumed that there are three buffer size level tables expected to be used, including a buffer size level table corresponding to a service volume value range with a service volume size identifier of 5bit shown in Table 1, a buffer size level table corresponding to the interactive small-rate service, and a buffer size level table corresponding to the video streaming or file downloading service. The expected BSR reporting type indication is used for indicating a type or granularity of a expected BSR reporting value; and the expected BSR format indication is used for indicating which BSR MAC CE format is expected to be used for BSR reporting.

In an embodiment, the service volume information feature of the service to be transmitted is indicated to the second communication node by using a Logical Channel (LC), a Logical Channel Group (LCG), or a Dedicated Radio Bearer (DRB) as a granularity.

In an embodiment, the first communication node reports the BSR by using an LC or a DRB as a granularity. The BSR is reported by using the LC or the DRB as the granularity, which includes: A BSR MAC CE contains a Logical Channel identifier (LC ID) or a Dedicated Radio Bearer identifier (DRB ID). In this embodiment, the granularity used by the first communication node to report the BSR is the same as the granularity of the used buffer size level table indicated by the second communication node. Exemplarily, if the second communication node indicates the size level table to be used by using the LC as the granularity, the first communication node reports the BSR by using the LC as the granularity. For another example, if the second communication node indicates the size level table to be used by using the LCG as the granularity, the first communication node reports the BSR by using the LCG as the granularity. For still another example, if the second communication node indicates the size level table to be used by using the DRB as the granularity, the first communication node reports the BSR by using the DRB as the granularity.

In an embodiment, the buffer size report related parameter includes: an indication of supporting that the same MAC PDU or the same TTI contains a plurality of BSR MAC CEs. Exemplarily, a BSR is reported, which includes: the same MAC PDU or the same TTI contains K BSR MAC CEs.

A buffer size value corresponding to one LCG identifier is a sum of buffer size values corresponding to the LCG identifier in the K BSR MAC CEs. K is a positive integer.

In this embodiment, a plurality of BSRs may be connected in series to accurately express a Transport Block Size (TBS). In this embodiment, in a case that the same MAC PDU or TTI contains a plurality of BSR MAC CEs, the buffer size value corresponding to one LCG identifier is equal to a sum of the buffer size values corresponding to the LCG identifier in the plurality of BSR MAC CEs. Exemplarily, if the same MAC PDU or TTI contains three BSR MAC CEs, and each of the three BSR MAC CEs contains one LCG identifier, and the values of the LCG identifiers in the three BSR MAC CEs are the same, the size value corresponding to the LCG identifier is a sum of the buffer size values corresponding to the LCG identifier in the three BSR MAC CEs. In this way, it is equivalent to splitting an imprecise buffer size value into a plurality of precise buffer size values for reporting, thereby saving the resource overhead of uplink scheduling.

In an embodiment, the buffer size report related parameter includes: a BSR reporting format indication. Exemplarily, a BSR MAC CE includes: a quantity of LCG identifiers, at least two LCG identifiers, and the buffer size value corresponding to each LCG identifier. The number of the LCG identifiers contained in each BSR MAC CE is the same as the quantity of LCG identifiers. The LCG identifiers correspond to the buffer size values in a one-to-one manner in sequence.

If the same LCG identifier appears in the BSR MAC CE for K times, the buffer size value corresponding to the LCG identifier is a sum of the buffer size values corresponding to the LCG identifier. In this embodiment, the quantity of LCG identifiers refers to the number of the LCG identifiers contained in each BSR MAC CE. For example, the quantity of LCG identifiers may be denoted as LCG Num. That is, if LCG Num is 3, each BSR MAC CE contains three LCG identifiers. In this embodiment, each LCG identifier corresponds to the buffer size value in the one-to-one manner in sequence, that is, the number of the LCG identifiers contained in each BSR MAC CE is the same as the quantity of LCG identifiers (namely, LCG Num), and the number of the buffer size values is also the same as LCG Num. In this embodiment, the LCG identifiers in the same BSR MAC CE may be the same, that is, one LCG identifier may correspond to a plurality of buffer size values, and the buffer size value corresponding to the LCG identifier is equal to the sum of the plurality of buffer size values corresponding to the LCG identifier.

In this embodiment, the number of bits occupied by the quantity of LCG identifiers and the LCG identifiers are not an integral multiple of 8 bits, and reserved bits are used, aligned with a minimum bit number among integral multiples of 8 bits. In this embodiment, in a case that a total number of bits occupied by the quantity of LCG identifiers and bits occupied by all the LCG identifiers is not an integral multiple of 8 bits, reserved bits may be used to be aligned with the integral multiple of 8 bits, so that a total number of the bits occupied by the quantity of LCG identifiers, the bits occupied by all the LCG identifiers, and the reserved bits is an integral multiple of 8 bits.

In an embodiment, the buffer size report related parameter includes: a BSR reporting format indication. Exemplarily, a BSR is reported, which includes: a BSR MAC CE includes: a quantity indication field of buffer size values, an LCG identifier, an LC identifier, or a DRB identifier, and K buffer size indication fields; and K is determined according to the quantity indication field of buffer size values. K is a positive integer. The buffer size value corresponding to the LCG identifier, the LC identifier, or the DRB identifier is a sum of all the buffer size values corresponding to the LCG identifier, the LC identifier, or the DRB identifier. In this embodiment, the first communication node reports the BSR according to the LCG identifier, the LC identifier, or the DRB identifier. The plurality of buffer size values are configured in bits behind the bits occupied by the LCG identifier, the LC identifier, or the DRB identifier, so that the buffer size value corresponding to the LCG identifier, the LC identifier, or the DRB identifier is the sum of the plurality of buffer size values corresponding to the LCG identifier, the LC identifier, or the DRB identifier. This can reduce the resource overhead of the LCG identifier and support BSR reporting at a finer granularity. The BSR can also be reported according to the LC identifier or the DRB identifier.

In an embodiment, the buffer size report related parameter includes: a parameter that determines the buffer size level table. Before a target buffer size report related parameter used by the service to be transmitted is determined, the method further includes: A maximum TBS value configured by the second communication node according to a logical channel, a logical channel group, or a DRB is received. A buffer size report related parameter used by a service to be transmitted is determined, which includes: A buffer size level table used by the service to be transmitted is determined according to the maximum TBS value. In this embodiment, a cell where the first communication node is located or the second communication node configures, according to the LC, the LCG, or the DRB, the maximum TBS value that can be supported to the first communication node, so that the first communication node determines the used buffer size level table according to the maximum TBS value.

In an embodiment, the buffer size report related parameter includes: an indication of using a buffer size level table. Before a target buffer size report related parameter used by the service to be transmitted is determined, the method further includes: At least one of the following is received: indication information of a buffer size level table, a BSR reporting type indication, a BSR format indication, and an indication of supporting a specific BSR reporting manner, broadcast by a cell where the first communication node is located. A buffer size report related parameter used by a service to be transmitted is determined, which includes: According to at least one of the indication information of the buffer size level table, the BSR reporting type indication, the BSR format indication, and the indication of supporting a specific BSR reporting manner, the buffer size level table used by the service to be transmitted is determined. In this embodiment, the indication information of the buffer size level table is used for indicating the buffer size level table used by the first communication node. It can be understood that if the cell where the first communication node is located indicates the first communication node the buffer size level table used by the first communication node, the first communication node adopts the buffer size level table. If the cell corresponding to the first communication node does not broadcast the indication information of the buffer size level table, the first communication node adopts Table 1 for BSR reporting by default.

In an embodiment, the buffer size report related parameter includes: buffer size values corresponding to the buffer size level table.

Before a target buffer size report related parameter used by the service to be transmitted is determined, the method further includes: A minimum TBS value, a maximum TBS value, and a granularity that are broadcast by a cell where the first communication node is located or that are sent by a second communication node and configured according to a logical channel, a logical channel group, or a DRB. A buffer size report related parameter used by a service to be transmitted is determined, which includes: Buffer size values corresponding to a buffer size level table used by the service to be transmitted are determined according to at least two of the minimum TBS value, the maximum TBS value, and the granularity.

In this embodiment, the cell where the first communication node is located broadcasts or the second communication node configures the minimum TBS value, the maximum TBS value, and the granularity to the first communication node according to the LC, the LCG, or the DRB. The first communication node automatically calculates the buffer size value corresponding to each buffer size level table or buffer size level according to at least two of the minimum TBS value, the maximum TBS value, and the granularity.

In an embodiment, the buffer size report related parameter includes: an indication of a used buffer size level table.

Each buffer size level in the buffer size level table at least occupies two bytes. In this embodiment, more bits are allocated to each buffer size level table to define finer-grained BSR values, so that buffer size values can be more accurately determined.

In an embodiment, the buffer size report related parameter includes: buffer size values.

K buffer size intervals are preconfigured; and a buffer size value used by the service to be transmitted is determined according to the K buffer size intervals, wherein the buffer size value is equal to a sum of buffer size values within the K buffer size intervals, and K is a positive integer.

The buffer size interval refers to a range of a buffer size value, wherein different buffer size intervals corresponding to different buffer size level tables are different, that is, the buffer size intervals correspond to the buffer size level tables in a one-to-one manner. In this embodiment, the first communication node or the second communication node predefines a plurality of buffer size intervals, so that the first communication node determines the used buffer size level table according to its own buffer size value, and can then determine the used buffer size value.

In an embodiment, FIG. 2 is a flowchart of another information transmission method according to an embodiment of the present application. This embodiment may be executed by an information transmission device. The information transmission device may be a second communication node. Exemplarily, the second communication node is a base station. As shown in FIG. 2, this embodiment includes S210 to S220.

S210. A pre-configured buffer size report related parameter is sent to a first communication node.

S220. A BSR reported by the first communication node based on the buffer size report related parameter is received.

In an embodiment, the buffer size report related parameter includes at least one of the following: an indication of a used buffer size level table, a BSR reporting type indication, a BSR format indication, and an indication of supporting a specific BSR reporting manner.

The information transmission method applied to the second communication node further includes: A service volume information feature of the service to be transmitted indicated by the first communication node or a third communication node is received, wherein the service volume information feature at least includes one of the following: a service volume value range; an application layer service type; a buffer size level table expected to be used; an expected BSR reporting type indication; and a BSR format indication expected to be used.

In an embodiment, the third communication node indicates the second communication node the service volume information feature according to a packet data unit session, a Quality of Service (QoS) flow or a QoS sub-flow.

In an embodiment, the second communication node indicates the buffer size report related parameter by using an LC, an LCG, or a DRB as a granularity.

In an embodiment, before the pre-configured buffer size report related parameter is sent to the first communication node, the method further includes: A maximum TBS value configured according to a logical channel, a logical channel group, or a DRB is sent to the first communication node.

In an embodiment, a BSR reported by the first communication node based on the buffer size report related parameter is received, which includes: The same MAC PDU or the same TTI contains K BSR MAC CEs.

A buffer size value corresponding to one LCG identifier is a sum of buffer size values corresponding to the LCG identifier in the K BSR MAC CEs, K being a positive integer. In an embodiment, before the pre-configured buffer size report related parameter is sent to the first communication node, the method further includes: A minimum TBS value, a maximum TBS value, and a granularity that are configured according to a logical channel, a logical channel group, or a DRB are sent to the first communication node.

In an embodiment, the buffer size report related parameter includes: an indication of a used buffer size level table, a BSR reporting type indication, a BSR format indication, and an indication of supporting a specific BSR reporting manner; the parameter is indicated by using an LC, an LCG, or a DRB as a granularity.

The buffer size report related parameter is configured by the second communication node through a broadcasting signaling or a UE dedicated signaling.

In an embodiment, the service volume information feature at least includes one of the following: a service volume value range; an application layer service type; a buffer size level table expected to be used; an expected BSR reporting type indication; and a BSR format indication expected to be used.

In an embodiment, the second communication node receives the service volume information feature of the service to be transmitted indicated by the first communication node by using the LC, the LCG, or the DRB as the granularity.

In an embodiment, the BSR reported by the first communication node by using the LC or the DRB as the granularity is received. The BSR reported by using the LC or the DRB as the granularity includes: an LC identifier or a DRB identifier contained in a BSR MAC CE.

In an embodiment, a BSR is reported, which includes: the same MAC PDU or the same TTI contains K BSR MAC CEs.

A buffer size value corresponding to one LCG identifier is a sum of buffer size values corresponding to the LCG identifier in the K BSR MAC CEs, wherein K is a positive integer.

In an embodiment, a BSR is reported, which includes: A BSR MAC CE includes: a quantity of LCG identifiers, at least two LCG identifiers, and the buffer size value corresponding to each LCG identifier. The number of the LCG identifiers contained in each BSR MAC CE is the same as the quantity of LCG identifiers. The LCG identifiers correspond to the buffer size values in a one-to-one manner in sequence. If the same LCG identifier appears in the BSR MAC CE for K times, the buffer size value corresponding to the LCG identifier is a sum of the K buffer size values corresponding to the LCG identifier.

In this embodiment, the number of bits occupied by the quantity of LCG identifiers and the LCG identifiers are not an integral multiple of 8 bits, and reserved bits are used, aligned with a minimum bit number among integral multiples of 8 bits.

In an embodiment, a BSR MAC CE includes: a quantity indication field of buffer size values, an LCG identifier, an LC identifier, or a DRB identifier, and K buffer size indication fields; and K is determined according to the quantity indication field of buffer size values.

A buffer size value corresponding to the LCG identifier, the LC identifier, or the DRB identifier is a sum of K corresponding buffer size values, wherein K is a positive integer.

In an embodiment, the buffer size report related parameter includes: a used buffer size level table.

Each buffer size level at least occupies two bytes.

In an embodiment, the buffer size report related parameter includes: buffer size values.

K buffer size intervals are preconfigured; and a buffer size value used by the service to be transmitted is determined according to the K buffer size intervals, wherein the buffer size value is equal to a sum of buffer size values within the K buffer size intervals, and K is a positive integer.

It should be noted that the explanation of the multiple parameters in the information transmission method applied to the second communication node can be found in the description of the information transmission method applied to the first communication node in the above embodiments, and will not be elaborated here.

### Embodiment 1

In this embodiment, by way of example, a buffer size level table is denoted as: Buffer size levels table; a buffer size value is denoted as Buffer size; a first communication node is a UE; a second communication node is a base station; and a third communication node is a core network. A process of reporting service volume information is explained. For a typical service feature, a Buffer Size fluctuation range of a service to be transmitted is determined, and a plurality of Buffer size levels tables are predefined.

Exemplarily, for a service volume value range with a service volume size identifier of 5bit (Buffer size levels (in bytes) for 5-bit Buffer Size field), two buffer size level tables are configured according to an application layer service type. Table 3 is a schematic table of values of buffer size levels in a BSR provided according to an embodiment of the present application, and Table 4 is a schematic table of values of buffer size levels in another BSR provided according to an embodiment of the present application. Table 3 (namely, Buffer size levels have smaller values) is set for interactive small-rate services. Table 4 (namely, the buffer size levels have larger values) is set for video streaming or file downloading services.

**Table 3**

| Index | BS value | Index | BS value | Index | BS value | Index | BS value |
|---|---|---|---|---|---|---|---|
| 0 | 0 | 8 | BS <= 31 | 16 | BS <= 107 | 24 | BS <= 376 |
| 1 | ≤ 10 | 9 | BS <= 36 | 17 | BS <= 125 | 25 | BS <= 440 |
| 2 | ≤ 14 | 10 | BS <= 42 | 18 | BS <= 146 | 26 | BS <= 515 |
| 3 | ≤ 20 | 11 | BS <= 49 | 19 | BS <= 171 | 27 | BS <= 603 |
| 4 | ≤ 28 | 12 | BS <= 57 | 20 | BS <= 200 | 28 | BS <= 706 |
| 5 | ≤ 38 | 13 | BS <= 67 | 21 | BS <= 234 | 29 | BS <= 826 |
| 6 | ≤ 53 | 14 | BS <= 78 | 22 | BS <= 274 | 30 | BS <= 967 |
| 7 | ≤ 74 | 15 | BS <= 91 | 23 | BS <= 321 | 31 | 967 < BS |

**Table 4**

| Index | BS value | Index | BS value | Index | BS value | Index | BS value |
|---|---|---|---|---|---|---|---|
| 0 | BS= 0 | 8 | BS <= 4677 | 16 | BS <= 16507 | 24 | BS <= 58255 |
| 1 | BS <= 1000 | 9 | BS <= 5476 | 17 | BS <= 19325 | 25 | BS <= 68201 |
| 2 | BS <= 1817 | 10 | BS <= 6411 | 18 | BS <= 22624 | 26 | BS <= 79846 |
| 3 | BS <= 2127 | 11 | BS <= 7505 | 19 | BS <= 26487 | 27 | BS <= 93479 |
| 4 | BS <= 2490 | 12 | BS <= 8787 | 20 | BS <= 31009 | 28 | BS <= 109439 |
| 5 | BS <= 2915 | 13 | BS <= 10287 | 21 | BS <= 36304 | 29 | BS <= 128125 |
| 6 | BS <= 3413 | 14 | BS <= 12043 | 22 | BS <= 42502 | 30 | BS <= 150000 |
| 7 | BS <= 3995 | 15 | BS <= 14099 | 23 | BS <= 49759 | 31 | BS > 150000 |

In this embodiment, the UE or the core network indicates the base station a service volume information feature. The service volume information feature may include one of the following: a service volume value range; an application layer service type (for example, the interactive small-rate service, and the video streaming or file downloading service); an indication of a Buffer size levels table expected to be used (Table 1, Table 2, or Table 3). The core network may indicate the base station the service volume information feature according to an indication of a PDU session, a QoS flow or a QoS sub-flow. The UE may indicate the base station the service volume information feature at a granularity of LC, LCG, or DRB.

The base station configures the indication of a used Buffer size levels table to the UE (instructing Table 1, Table 2, or Table 3 to be used), and the base station may indicate the table at the granularity of LC, LCG, or DRB.

If the UE receives the indication of a used Buffer size levels table that is configured by the base station to the UE (instructing Table 1, Table 2, or Table 3 to be used), the UE selects a corresponding BSR table according to the indication for BSR reporting. If the UE receives no indication, the UE reports the BSR according to Table 1 by default.

If the base station makes the indication at the granularity of LC, the UE reports the BSR (which includes an LC ID) at the granularity of LC. If the base station makes the indication at the granularity of LCG, the UE reports the BSR (which includes an LCG ID) at the granularity of LCG. If the base station makes the indication at the granularity of DRB, the UE reports the BSR (which includes a DRB ID) at the granularity of DRB.

In this embodiment, the base station may not configure the indication of a used Buffer size levels table, but the UE selects a Buffer size levels table. At this time, the Buffer size levels table is distinguished through different LC IDs for uplink shared channel (UL-SCH) in an MAC subheader. At this point, the base station determines, based on the LC IDs for UL-SCH in the MAC subheader, which Buffer size levels table the UE uses.

In this embodiment, the Buffer Size values in the Buffer size levels tables and the number of Buffer size levels tables are only examples. Actual Buffer Size values and the actual number of Buffer size levels tables may be different from this embodiment.

### Embodiment 2

A method of expressing an accurate TBS using a plurality of BSRs connected in series is provided.

FIG. 3 is a schematic diagram of configuration of a Short BSR MAC CE contained in the same MAC PDU or the same TTI provided according to an embodiment of the present application. As shown in FIG. 3, the same MAC PDU or the same TTI contains a plurality of BSR MAC CEs, and a Buffer Size corresponding to one LCG ID is equal to a sum of the Buffer Sizes corresponding to the LCG ID in the plurality of BSR MAC CEs.

Exemplarily, if the same MAC PDU or the same TTI contains three BSR MAC CEs, and values of an LCG ID in the three BSR MAC CEs are all the same, the Buffer Sizes corresponding to the LCG ID is a sum of the Buffer Sizes in the three BSR MAC CEs.

In this way, it is equivalent to splitting an imprecise Buffer Size into a plurality of precise Buffer Size values for reporting.

For example, the UE reports a BSR with Buffer Size=1783 bytes, but there are no values in Table 1 that are close to Buffer Size=1783 bytes. If the UE reports index=17, the eNB allocates resources according to Buffer Size=2014 bytes, which is 231 bytes (=2014 bytes-1783 bytes) more than Buffer Size that is expected to be reported. This wastes the resources of the UL-SCH. However, if two BSR MAC CEs are used for reporting, for example, if a reporting value of the first MAC CE is Index=15 (corresponding to Buffer Size=1038 bytes), and a reporting value of the second MAC CE is Index=14 (corresponding to Buffer Size=745 bytes), the base station allocates resources based on 1038 Bytes+745 Bytes=1783 bytes, which is consistent with the expectation of the UE. Although the overhead is increased by 2 Bytes when the UE reports a BSR, the resource overhead is saved by 231 Bytes during subsequent uplink scheduling.

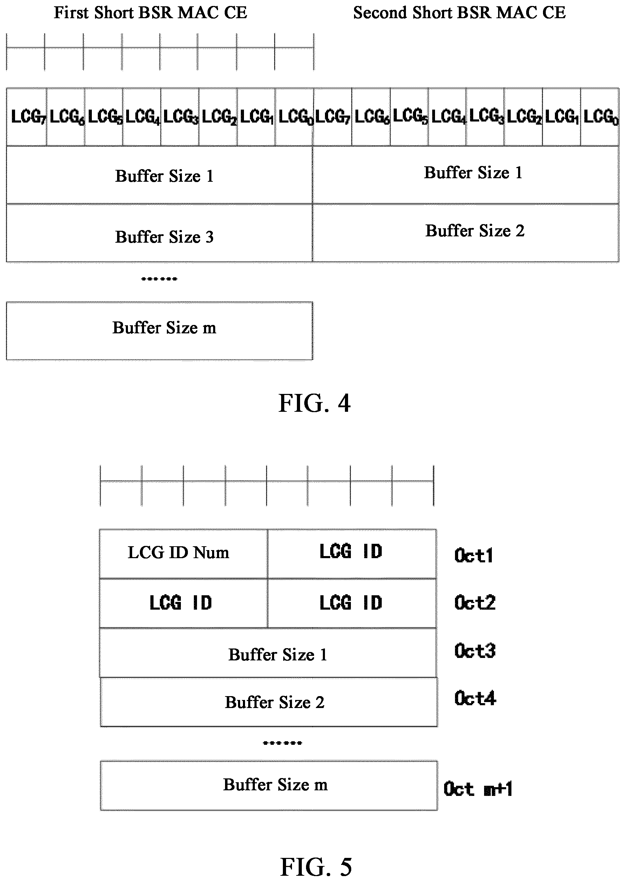

This embodiment takes a Short BSR MAC CE for an example, and is also applicable to a Long BSR MAC CE scenario. Exemplarily, FIG. 4 is a schematic diagram of configuration of a Long BSR MAC CE contained in the same MAC PDU or the same TTI provided according to an embodiment of the present application. As shown in FIG. 4, if two Long BSR MAC CEs are contained in the same MAC PDU or the same TTI, BSR reporting means: A sum of the Buffer Sizes corresponding to the LCG IDs in the two Long BSR MAC CEs is the Buffer Size of the LCG ID.

It should be noted that in the related technology, the same MAC PDU or the same TTI may only contain one BSR MAC CE, so it is not possible to split a buffer size into a plurality of buffer sizes. If a buffer size is split into a plurality of values placed in a plurality of MAC PDUs for transmissions for multiple times, the base station may use the latest received MAC PDU as the basis, and a BSR transmission delay increases.

### Embodiment 3

Another method for expressing an accurate TBS using a plurality of BSRs connected in series (compared to the method of Long BSR MAC CEs connected in series in Embodiment 2, this method can reduce the overhead of LCG ID).

FIG. 5 is a schematic diagram of configuration of a Long BSR MAC CE according to an embodiment of the present application. As shown in FIG. 5, a BSR MAC CE contains a quantity of LCG IDs (denoted as LCG Num), a plurality of LCG IDs, and the Buffer Size value corresponding to each LCG ID: The LCG IDs and the Buffer Size values correspond to each other in a one-to-one manner.

The quantity of LCG IDs (LCG Num) indicates the number of the LCG IDs and the Buffer Size values corresponding to these LCG IDs.

The LCG IDs in the same BSR MAC CE may be the same, meaning that one LCG ID value may correspond to a plurality of Buffer Sizes. In this case, the Buffer Size corresponding to the LCG ID is equal to a sum of the plurality of Buffer Sizes corresponding to the LCG ID.

If the number of bits occupied by the LCG ID Num and the LCG IDs is not an integer multiple of 8 bits, reserved bits are used, aligned with a minimum bit number among integral multiples of 8 bits.

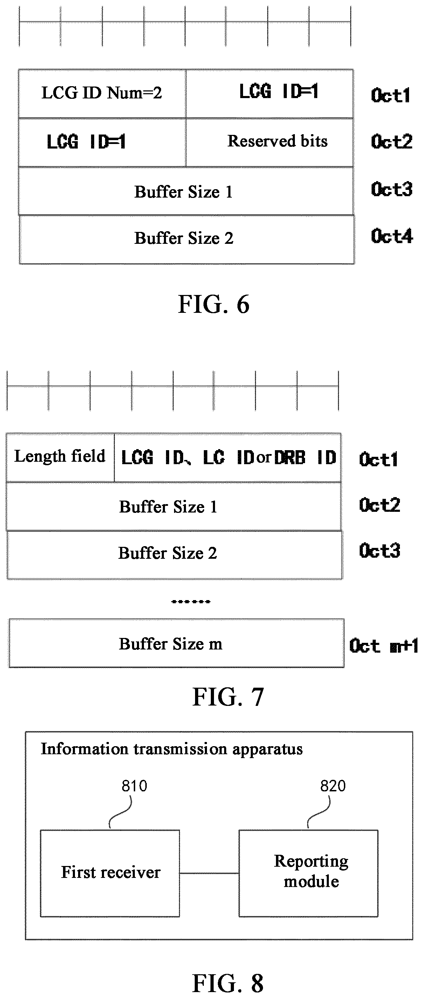

Exemplarily, FIG. 6 is a schematic diagram of configuration of another Long BSR MAC CE according to an embodiment of the present application. As shown in FIG. 6, LCG ID Num=2 in a BSR MAC CE indicates that there are two LCG IDs corresponding to two Buffer Sizes. The values of the two LCG IDs are 1, and the meaning expressed by the BSR MAC CE is: Buffer Size value of LCG ID=1=Buffer Size 1+Buffer Size 2.

Since the LCG ID Num and the two LCG IDs occupy 12 bits, which is not an integral multiple of 8 bits, four reserved bits are used, aligned with an integral multiple of 8 bits (the LCG ID Num, the two LCG IDs, and the four reserved bits occupy a total of 16 bits, which is an integral multiple of 8 bits).

In this embodiment, the LCG ID may also be an LC ID or a DRB ID, and the number of bits occupied by each field is only used as an example. An actual value used may be different from the example.

Due to a difference between the structure of this BSR MAC CE and the structure of the BSR MAC CE in the standard of the relevant technology, the UE may select one of the structures and distinguish the two structures by using different LC IDs for UL-SCH in an MAC subheader, or the base station may instruct the UE to use one of the structures.

### Embodiment 4

Another method for expressing an accurate TBS using a plurality of BSRs connected in series (compared to the method of Long BSR MAC CEs connected in series in Embodiment 2, this method can reduce the overhead of LCG ID. Furthermore, BSR reporting at a finer granularity can be supported, or reporting according to an LC ID or DRB ID can also be supported).

FIG. 7 is a schematic diagram of configuration of still another Long BSR MAC CE according to an embodiment of the present application. As shown in FIG. 7, during BSR reporting, a UE may report a BSR according to an LCG ID, an LC ID, or a DRB ID. Several Buffer Sizes may be contained behind bits corresponding to each ID, and a Length field indicates a quantity of Buffer Sizes contained. The Buffer Size corresponding to the LCG ID, the LC ID, or the DRB ID is equal to a sum of the plurality of Buffer Sizes corresponding to the LCG ID, the LC ID, or the DRB ID.

### Embodiment 5

A supportable maximum or minimum TBS value is broadcast by a cell or is configured by a base station to a UE according to a logical channel, a logical channel group, or a DRB, and a Buffer size level table is determined based on the maximum or minimum TBS value.

In this embodiment, the supportable maximum TBS value is broadcast by the cell or is configured by the base station to the UE according to the logical channel, the logical channel group, or the DRB, and the UE and the base station determine the Buffer size level table based on the maximum TBS value. For example, for the three Buffer size level tables in Embodiment 1, if the maximum TBS broadcast by the cell is 967, Table 3 will be used; and if the minimum TBS broadcast by the cell is 1000, Table 4 will be used. If no value is broadcast, Table 1 will be used.

### Embodiment 6

An indication of a used Buffer size level table is broadcast by a cell, and a UE selects a Buffer size level table according to the indication.

For example, for the three tables in Embodiment 1, if Table 3 is instructed to be used during broadcasting of the cell, both the UE and the base station will understand the meanings of Buffer size level (Index) values according to Table 3. If the base station does not broadcast an indication, a BSR will be reported by default according to Table 1.

### Embodiment 7

A minimum TBS value, a maximum TBS value, and/or a granularity are broadcast by a cell or are configured by a base station to a UE according to a logical channel, a logical channel group, or a DRB. The UE and the base station automatically calculate a Buffer size value corresponding to each Buffer size level (Index).

In this embodiment, no new Buffer size level is introduced, but the Buffer size values corresponding to the Buffer size levels (Indexes) are automatically calculated based on the minimum TBS value, the maximum TBS value, and the granularity. For example, if the minimum TBS value configured by the base station to the UE is 2 and the granularity is 2, the Buffer size values corresponding to the Buffer size levels (Indexes) may be calculated as: 0, 2, 4, 6, 8, 10... (0 is used for indicating that data transmission is completed, or a data buffer region is empty and is not included in a calculation range of the Buffer size values). If the minimum TBS value configured by the base station to the UE is 2, and the maximum TBS value is 1000, a Buffer size step length calculated by the base station is (1000-2)/30, floor (1000-2)/30. The first calculated Buffer size value corresponding to the Buffer size level (index) is: floor (2 +(1000-2)/30) or cell (2 + (1000-2)/30).

Floor represents rounding down, and cell represents rounding up.

The minimum TBS value, the maximum TBS value, and/or the granularity configured by the base station to the UE may be configured according to LCG, LC, or DRB. If the minimum TBS value, the maximum TBS value, and/or the granularity are configured according to LC or DRB, the UE reports a BSR according to LC or DRB.

### Embodiment 8

A finer-grained BSR value is defined. One Buffer Size level table occupies more bits.

For example, if one Buffer Size level table occupies two or three bytes, it can represent a finer-grained BSR value compared to Table 1.

Specific use of which BSR table may be indicated by a base station by broadcasting, or indicated by a base station according to a logical channel, a logical channel group, or a DRB by configuration to a UE. Or, the UE may independently select which BSR table, and distinguish tables by LC IDs for UL-SCH in an MAC subheader.

### Embodiment 9

N Buffer Size intervals are pre-defined, and a Buffer Size value is a cumulative result of a plurality of reported interval values.

For example: For Buffer size levels Table 1 (Buffer Size interval 0 to 1000), a value reported by a UE is XX: occupying 8 bits.

For Buffer size levels Table 2 (Buffer Size interval 1000 to 10000), a value reported by the UE is YY: occupying 4 bits.

For Buffer size levels Table 3 (Buffer Size interval 10000 to 100000), a value reported by the UE is ZZ: occupying 4 bits.

Thus, the reported Buffer size value is ZZ* 10000+YY* 1000+XX, and 16 bits can express a value of 200000 at most.

### Way 1:

Buffer size levels Table 1 expresses a Buffer Size interval 0 to 100000000; a value reported by the UE is XX: occupying 8 bits; and an interval of T3 is 524288 (power of 2).

Buffer size levels Table 2 expresses a Buffer Size interval 0 to 524288; a value reported by the UE is YY: occupying 4 bits; and an interval of T2 is 32768.

Buffer size levels Table 3 expresses a Buffer Size interval 0 to 32768; a value reported by the UE is ZZ: occupying 4 bits; and an interval of T1 is 2048.

Thus, the Buffer size value reported by the UE=ZZ* 524288+YY* 32768+XX* 2048.

### Way 2:

Buffer size levels Table 1 is an 8-bit table, and a value reported by a UE is XX: occupying 8 bits.

Buffer size levels Table 2 expresses a Buffer Size interval 0 to T2*16; a value reported by the UE is YY: occupying 4 bits; and an interval of T2 is 4096, 16384, T1*16, and the like.

Buffer size levels Table 3 expresses a Buffer Size interval 0 to T1*16; a value reported by the UE is ZZ: occupying 4 bits; and an interval of T1 is 256, 512, 768, 1024, 1536, 2048, and the like.

Thus, the Buffer size value reported by the UE=ZZ+YY* T2+XX* T1.

### Way 3:

Buffer size levels Table 1 is an 8-bit table, and a value reported by a UE is XX: occupying 8 bits.

Buffer size levels Table 2 represents a Buffer Size interval T to T* 256, where T is an interval, and T may be 256, 512, 768, 1024, 1536, 2048, and the like, and a value reported by the UE is YY: occupying 8 bits.

Thus, the Buffer size value reported by the UE=ZZ+YY.

### Way 4:

Buffer size levels Table 1 is an 8-bit table, and a value reported by a UE is XX: occupying 8 bits.

Buffer size levels Table 2 represents that a Buffer Size interval is an interval of 16 values extracted from an 8-bit table, which may be equally or unevenly spaced. A value reported by the UE is YY: occupying 4 bits.

Buffer size levels Table 3 represents that a Buffer Size interval is an interval of 16 values extracted from an 8-bit table, which may be equally or unevenly spaced. A value reported by the UE is ZZ: occupying 4 bits.

Thus, the Buffer size value reported by the UE= ZZ+YY+XX.

In an embodiment, the granularities of multiple intervals in each table may not necessarily be the same. For example, in the tables of the related technology, the intervals within a large value range are not exactly the same.

In an embodiment, only large tables are defined. For example: for a large table with an interval of a buffer size value of 1024, 65536, or 32768, the base station configures a BSR for each logical channel to indicate a range of index from start to end in the large table.

If there are three tables, assuming that a value range of a Buffer size value reported by the UE in Table 1 is Z1 to Z2, a value range of a Buffer size value reported by the UE in Table 2 is Y1 to Y2, and a value range of a Buffer size value reported by the UE in Table 3 is X1 to X2, then the value range of the Buffer size value reported by the UE is from X1+Y1+Z1 to X2+Y2+Z2.

If there are two tables, assuming that a value range of a Buffer size value reported by the UE in Table 1 is Z1 to Z2, and a value range of a Buffer size value reported by the UE in Table 2 is Y1 to Y2, then the value range of the Buffer size value reported by the UE is from Y1+Z1 to Y2+Z2.

In an embodiment, multiple tables may have an increasingly small granularity; or, different tables may be defined for different value ranges; or, it is a combination of a legacy table and tables with other new granularities.

In an embodiment, FIG. 8 is a structural block diagram of an information transmission apparatus according to an embodiment of the present application. The information transmission apparatus in this embodiment is integrated to a first communication node. As shown in FIG. 8, this embodiment includes: a first receiver 810 and a reporting module 820.

The first receiver 810 is configured to receive or determine a buffer size report related parameter used by a service to be transmitted; and the reporting module 820 is configured to report a BSR based on the buffer size report related parameter.

In an embodiment, the buffer size report related parameter includes at least one of the following: an indication of a used buffer size level table, a BSR reporting type indication, a BSR format indication, and an indication of supporting a specific BSR reporting manner; the buffer size report related parameter is indicated using an LC, an LCG, or a DRB as a granularity; and the buffer size report related parameter is configured by a second communication node through a broadcasting signaling or a UE dedicated signaling.

In an embodiment, the information transmission apparatus applied to the first communication node further includes: an indication module, configured to: before receiving or determining a buffer size report related parameter used by a service to be transmitted, indicate a second communication node a service volume information feature corresponding to the service to be transmitted.

In an embodiment, the service volume information feature at least includes one of the following: a service volume value range; an application layer service type; a buffer size level table expected to be used; an expected BSR reporting type indication; and a BSR format indication expected to be used.

In an embodiment, the indication module is configured to: indicate the second communication node the service volume information feature of the service to be transmitted by using the LC, the LCG, or the DRB as the granularity.

In an embodiment, the first communication node reports the BSR by using the LC or the DRB as the granularity; and the reporting the BSR by using the LC or the DRB as the granularity includes: a BSR MAC CE containing an LC identifier or a DRB identifier.

In an embodiment, the reporting a BSR includes: a same MAC PDU or a same TTI containing K BSR MAC CEs, wherein a buffer size value corresponding to one LCG identifier is a sum of buffer size values corresponding to the LCG identifier in the K BSR MAC CEs, wherein K is a positive integer.

In an embodiment, the reporting a BSR includes: a BSR MAC CE including a quantity of LCG identifiers, at least two LCG identifiers, and the buffer size value corresponding to each LCG identifier, wherein the number of the LCG identifiers contained in each BSR MAC CE is the same as the quantity of LCG identifiers; the LCG identifiers correspond to the buffer size values in a one-to-one manner in sequence; and if the same LCG identifier appears in the BSR MAC CE for K times, the buffer size value corresponding to the LCG identifier is a sum of the K buffer size values corresponding to the LCG identifier.

In this embodiment, the number of bits occupied by the quantity of LCG identifiers and the LCG identifiers are not an integral multiple of 8 bits, and reserved bits are used, aligned with a minimum bit number among integral multiples of 8 bits.

In an embodiment, a BSR MAC CE includes: a quantity indication field of buffer size values, an LCG identifier, an LC identifier, or a DRB identifier, and K buffer size indication fields; K is determined according to the quantity indication field of buffer size values; a buffer size value corresponding to the LCG identifier, the LC identifier, or the DRB identifier is a sum of all corresponding buffer size values, wherein K is a positive integer.

In an embodiment, the information transmission apparatus applied to the first communication node further includes: a second receiver, configured to: before determining a buffer size report related parameter used by a service to be transmitted, receive a maximum TBS value configured by a second communication node according to an LC, an LCG, or a DRB; and the determining a buffer size report related parameter used by a service to be transmitted includes: determining, according to the maximum TBS value, a buffer size level table used by the service to be transmitted.

In an embodiment, the buffer size report related parameter includes: an indication of a buffer size level table. The information transmission apparatus applied to the first communication node further includes: a third receiver, configured to: before determining a buffer size report related parameter used by a service to be transmitted, receive at least one of indication information of a buffer size level table, a BSR reporting type indication, a BSR format indication, and an indication of supporting a specific BSR reporting manner, broadcast by a cell where the first communication node is located. The determining a buffer size report related parameter used by a service to be transmitted includes: according to at least one of the indication information of the buffer size level table, the BSR reporting type indication, the BSR format indication, and the indication of supporting a specific BSR reporting manner, determining a buffer size level table used by the service to be transmitted.

In an embodiment, the buffer size report related parameter includes: buffer size values corresponding to a buffer size level table. The information transmission apparatus applied to the first communication node further includes: a fourth receiver, configured to: before determining a target buffer size report related parameter used by a service to be transmitted, receive a minimum TBS value, a maximum TBS value, and a granularity that are broadcast by a cell where the first communication node is located or that are sent by a second communication node and configured according to an LC, an LCG, or a DRB, wherein the determining a buffer size report related parameter used by a service to be transmitted includes: determining, according to at least two of the minimum TBS value, the maximum TBS value, and the granularity, buffer size values corresponding to a buffer size level table used by the service to be transmitted.

In an embodiment, the buffer size report related parameter includes: a buffer size level table. Each buffer size level in the buffer size level table occupies at least two bytes.

In an embodiment, the buffer size report related parameter includes: buffer size values. K buffer size intervals are preconfigured; and a buffer size value used by the service to be transmitted is determined according to the K buffer size intervals, wherein the buffer size value is equal to a sum of buffer size values within the K buffer size intervals, and K is a positive integer.

The information transmission apparatus provided in this embodiment is configured to implement the information transmission method of the embodiment applied to the first communication node shown in FIG. 1. The implementation principle and technical effects of the information transmission apparatus provided in this embodiment are similar, and will not be elaborated here.

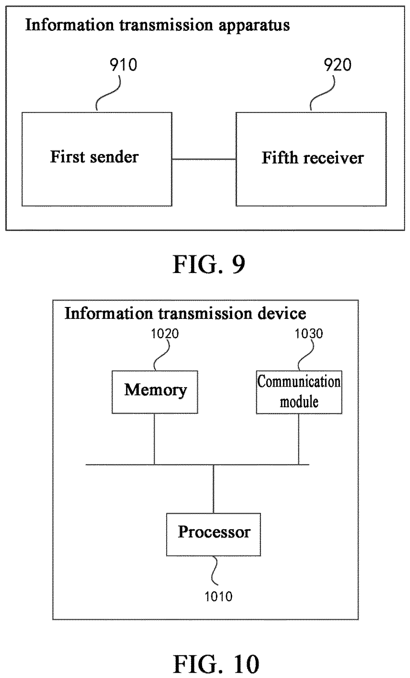

In an embodiment, FIG. 9 is a structural block diagram of another information transmission apparatus according to an embodiment of the present application. The information transmission apparatus in this embodiment is integrated to a second communication node. As shown in FIG. 9, this embodiment includes: a first sender 910 and a fifth receiver 920.

The first sender 910 is configured to send a pre-configured buffer size report related parameter to a first communication node; and the fifth receiver 920 is configured to receive a BSR reported by the first communication node based on the buffer size report related parameter.

In an embodiment, the buffer size report related parameter includes at least one of the following: an indication of a used buffer size level table, a BSR reporting type indication, a BSR format indication, and an indication of supporting a specific BSR reporting manner.

In an embodiment, the information transmission apparatus applied to the second communication node further includes: a sixth receiver, configured to: receive a service volume information feature of the service to be transmitted indicated by the first communication node or a third communication node, wherein the service volume information feature at least includes one of the following: a service volume value range; an application layer service type; a buffer size level table expected to be used; an expected BSR reporting type indication; and a BSR format indication expected to be used.

In an embodiment, the third communication node indicates the second communication node the service volume information feature according to a packet data unit session, a QoS flow or a QoS sub-flow.

In an embodiment, the second communication node indicates the buffer size report related parameter by using an LC, an LCG, or a DRB as a granularity.

In an embodiment, the information transmission apparatus applied to the second communication node further includes: a second sender, configured to: before sending the pre-configured buffer size report related parameter to the first communication node, send a maximum TBS value configured according to a logical channel, a logical channel group, or a DRB to the first communication node.

In an embodiment, the receiving a BSR reported by the second communication node based on the buffer size report related parameter includes: a same MAC PDU or a same TTI containing K BSR MAC CEs, wherein a buffer size value corresponding to one LCG identifier is a sum of buffer size values corresponding to the LCG identifier in the K BSR MAC CEs.

In an embodiment, the information transmission apparatus applied to the second communication node further includes: a third sender, configured to: before sending the pre-configured buffer size report related parameter to the first communication node, send a minimum TBS value, a maximum TBS value, and a granularity that are configured according to a logical channel, a logical channel group, or a DRB to the first communication node.

In an embodiment, the buffer size report related parameter includes at least one of the following: an indication of a used buffer size level table, a BSR reporting type indication, a BSR format indication, and an indication of supporting a specific BSR reporting manner; the buffer size report related parameter is indicated using an LC, an LCG, or a DRB as a granularity; and the buffer size report related parameter is configured by a second communication node through a broadcasting signaling or a UE dedicated signaling.

In an embodiment, the service volume information feature at least includes one of the following: a service volume value range; an application layer service type; a buffer size level table expected to be used; an expected BSR reporting type indication; and a BSR format indication expected to be used.

In an embodiment, the second communication node receives, by using the LC, the LCG, or the DRB as the granularity, the service volume information feature corresponding to the service to be transmitted indicated by the first communication node.

In an embodiment, the BSR reported by the first communication node by using the LC or the DRB as the granularity is received; and the reporting the BSR by using the LC or the DRB as the granularity includes: a BSR MAC CE containing an LC identifier or a DRB identifier.

In an embodiment, the reporting a BSR includes: a same MAC PDU or a same TTI containing K BSR MAC CEs, wherein a buffer size value corresponding to one LCG identifier is a sum of buffer size values corresponding to the LCG identifier in the K BSR MAC CEs, wherein K is a positive integer.

In an embodiment, the reporting a BSR includes: a BSR MAC CE including a quantity of LCG identifiers, at least two LCG identifiers, and the buffer size value corresponding to each LCG identifier, wherein the number of the LCG identifiers contained in each BSR MAC CE is the same as the quantity of LCG identifiers; the LCG identifiers correspond to the buffer size values in a one-to-one manner in sequence; and if the same LCG identifier appears in the BSR MAC CE for K times, the buffer size value corresponding to the LCG identifier is a sum of at least two buffer size values corresponding to the LCG identifier.

In this embodiment, the number of bits occupied by the quantity of LCG identifiers and the LCG identifiers are not an integral multiple of 8 bits, and reserved bits are used, aligned with a minimum bit number among integral multiples of 8 bits.

In an embodiment, the reporting a BSR includes: a BSR MAC CE including: a quantity indication field of buffer size values, an LCG identifier, an LC identifier, or a DRB identifier, and K buffer size indication fields; K is determined according to the quantity indication field of buffer size values; a buffer size value corresponding to any identifier among the LCG identifier, the LC identifier, or the DRB identifier is a sum of K buffer size values corresponding to the any identifier, wherein K is a positive integer.

In an embodiment, the buffer size report related parameter includes: a buffer size level table. Each buffer size level in the buffer size level table occupies at least two bytes.

In an embodiment, the buffer size report related parameter includes: buffer size values. The determining a buffer size report related parameter of a service to be transmitted includes: pre-configuring K buffer size intervals; and determining a buffer size value used by the service to be transmitted according to the K buffer size intervals, wherein the buffer size value is equal to a sum of buffer size values within the K buffer size intervals, and K is a positive integer.

The information transmission apparatus provided in this embodiment is configured to implement the information transmission method of the embodiment applied to the second communication node shown in FIG. 2. The implementation principle and technical effects of the information transmission apparatus provided in this embodiment are similar, and will not be elaborated here.

FIG. 10 is a schematic structural diagram of an information transmission device according to an embodiment of the present application. As shown in FIG. 10, the device provided in the present application includes: a processor 1010, a memory 1020, and a communication module 1030. The quantity of the processor 1010 in the device may one or more. By way of example, FIG. 10 shows one processor 1010. The quantity of the memory 1020 in the device is one or more. By way of example, FIG. 10 shows one memory 1020. The processor 1010, the memory 1020, and the communication module 1030 of the device are connected by a bus or in other ways. FIG. 10 shows bus connection by way of example. In this embodiment, the device may be a terminal side (such as a user equipment).

The memory 1020, as a computer-readable storage medium, may be configured to store software programs, computer-executable programs, and modules, such as program instructions/modules corresponding to the device in any embodiment of the present application (such as the first receiver 810 and the reporting module 820 in the information transmission apparatus). The memory 1020 may include a program storage region and a data storage region. The program storage region may store an operating system and an application program required by at least one function. The data storage region may store data created according to use of the device. In addition, the memory 1020 may include a high speed random access memory, and may further include a non-volatile memory, such as at least one magnetic disk storage device, a flash memory, or another non-volatile solid storage device. In some embodiments, the memory 1020 may further include memories remotely located with respect to the processor 1010. These remote memories may be connected to the device through a network. Examples of the above network include, but are not limited to, an Internet, an intranet, a local area network, a mobile communication network, and a combination of the Internet, the intranet, the local area network, and the mobile communication network

The communication module 1030 is configured to perform communication interaction with other communication nodes.

In a case that the information transmission device is a first communication node, the device provided above may be configured to implement the information transmission method applied to the first communication node provided in any of the above embodiments, and has corresponding functions and effects.

In a case that the information transmission device is a second communication node, the device provided above may be configured to implement the information transmission method applied to the second communication node provided in any of the above embodiments, and has corresponding functions and effects.

The embodiments of the present application further provide a storage medium including computer-executable instructions. The computer-executable instructions, when executed by a computer processor, are used for implementing the information transmission method applied to the first communication node. The method includes: receiving or determining a buffer size report related parameter used by a service to be transmitted; and reporting a BSR based on the buffer size report related parameter.

The embodiments of the present application further provide a storage medium including computer-executable instructions. The computer-executable instructions, when executed by a computer processor, are used for implementing the information transmission method applied to the second communication node. The method includes: sending a pre-configured buffer size report related parameter to a first communication node; and receiving a BSR reported by the first communication node based on the buffer size report related parameter.

A person skilled in the art should understand that the term "user equipment" encompasses any type of wireless user device, such as a mobile phone, a portable data processing apparatus, a portable web browser, or a vehicle-mounted mobile station.

Generally, various embodiments of the present application may be implemented in hardware or dedicated circuits, software, firmware, logic, or any combination thereof. For example, some aspects may be implemented in hardware, while other aspects may be implemented in firmware or software that can be executed by a controller, a microprocessor, or other computing apparatuses, although the present application is not limited to this

The embodiments of the present application may be implemented by executing computer program instructions through a data processor of a mobile apparatus, for example, in a processor entity, through hardware, or through a combination of software and hardware. The computer program instructions may be assembly instructions, Instruction Set Architecture (ISA) instructions, machine instructions, machine related instructions, microcodes, firmware instructions, state setting data, or source or object codes written in any combination of one or more programming languages.

The block diagram of any logical process in the accompanying drawings of the present application may represent program steps, or may represent interconnected logical circuits, modules, and functions, or may represent combinations of program steps with logical circuits, modules, and functions. The computer programs may be stored in a memory. The memory may have any type suitable for a local technology environment and may be implemented using any suitable data storage technology, such as but not limited to a Read Only Memory (ROM), a Random Access Memory (RAM), an optical storage apparatus and system (Digital Video Disc (DVD) or Compact Disk (CD)), and the like. The computer-readable medium may include a non-transient storage medium. The data processor may be any type suitable for the local technology environment, such as but not limited to a general-purpose computer, a dedicated computer, a microprocessor, a Digital Signal Processing (DSP), a Application Specific Integrated Circuit (ASIC), a Field-Programmable Gate Array (FPGA), and a processor based on a multi-core processor architecture.

## Claims

1. An information transmission method, applied to a first communication node, comprising:
receiving or determining a buffer size report related parameter used by a service to be transmitted; and
reporting a buffer status report (BSR) based on the buffer size report related parameter.

2. The method according to claim 1, wherein the buffer size report related parameter comprises at least one of the following: an indication of a used buffer size level table, a BSR reporting type indication, a BSR format indication, and an indication of supporting a specific BSR reporting manner; the buffer size report related parameter is indicated using a logical channel (LC), a logical channel group (LCG), or a dedicated radio bearer (DRB) as a granularity; and
the buffer size report related parameter is configured by a second communication node through a broadcasting signaling or a user equipment (UE) dedicated signaling.

3. The method according to claim 2, further comprising:
indicating the second communication node a service volume information feature corresponding to the service to be transmitted.

4. The method according to claim 3, wherein the service volume information feature at least comprises one of the following: a service volume value range; an application layer service type; a buffer size level table expected to be used; an expected BSR reporting type indication; and a BSR format indication expected to be used.

5. The method according to claim 3, wherein the indicating the second communication node a service volume information feature corresponding to the service to be transmitted comprises: indicating the second communication node the service volume information feature of the service to be transmitted by using the LC, the LCG, or the DRB as a granularity.

6. The method according to claim 2, wherein the first communication node reports the BSR by using the LC or the DRB as the granularity; and the reporting the BSR by using the LC or the DRB as the granularity comprises: a BSR media access control-control element (MAC CE) containing an LC identifier or a DRB identifier.

7. The method according to claim 1, wherein the reporting a BSR comprises: a same media access control-protocol data unit (MAC PDU) or a same transmission time interval (TTI) containing K BSR MAC CEs, wherein
a buffer size value corresponding to one LCG identifier is a sum of buffer size values corresponding to the LCG identifier in the K BSR MAC CEs, wherein K is a positive integer.

8. The method according to claim 1, wherein the reporting a BSR comprises: a BSR MAC CE comprising a quantity of LCG identifiers, at least two LCG identifiers, and the buffer size value corresponding to each LCG identifier; the LCG identifiers correspond to the buffer size values in a one-to-one manner in sequence; and
if the same LCG identifier appears in the BSR MAC CE for K times, the buffer size value corresponding to the LCG identifier is a sum of the K buffer size values corresponding to the LCG identifier.

9. The method according to claim 8, wherein the number of bits occupied by the quantity of LCG identifiers and the LCG identifiers is not an integral multiple of 8 bits, and reserved bits are used, aligned with a minimum bit number among integral multiples of 8 bits.

10. The method according to claim 1, wherein the reporting a BSR comprises: a BSR MAC CE comprising: a quantity indication field of buffer size values, one of an LCG identifier, an LC identifier, or a DRB identifier, and K buffer size indication fields; K is determined according to the quantity indication field of buffer size values;
a buffer size value corresponding to one of the LCG identifier, the LC identifier, or the DRB identifier is a sum of K buffer size values corresponding to the identifier; and K is a positive integer.

11. The method according to claim 1, wherein a maximum transport block size (TBS) value configured by a second communication node according to an LC, an LCG, or a DRB is received; and
the determining a buffer size report related parameter used by a service to be transmitted comprises:
determining, according to the maximum TBS value, a buffer size level table used by the service to be transmitted.

12. The method according to claim 1, further comprising:
receiving at least one of the following: indication information of a buffer size level table, a BSR reporting type indication, a BSR format indication, and an indication of supporting a specific BSR reporting manner, broadcast by a cell where the first communication node is located, wherein
the determining a buffer size report related parameter used by a service to be transmitted comprises:
according to at least one of the indication information of the buffer size level table, the BSR reporting type indication, the BSR format indication, and the indication of supporting a specific BSR reporting manner, determining a buffer size level table used by the service to be transmitted.

13. The method according to claim 1, further comprising:
receiving a minimum TBS value, a maximum TBS value, and a granularity that are broadcast by a cell where the first communication node is located or that are sent by a second communication node and configured according to an LC, an LCG, or a DRB, wherein
the determining a buffer size report related parameter used by a service to be transmitted comprises:
determining, according to at least two of the minimum TBS value, the maximum TBS value, and the granularity, buffer size values corresponding to a buffer size level table used by the service to be transmitted.

14. The method according to claim 1, wherein the buffer size report related parameter comprises: a buffer size level table; and
each buffer size level in the buffer size level table at least occupies two bytes.

15. The method according to claim 1, wherein the buffer size report related parameter comprises: buffer size values; and
the determining a buffer size report related parameter used by a service to be transmitted comprises:
pre-configuring K buffer size intervals; and
determining, according to the K buffer size intervals, a buffer size value used by the service to be transmitted,
wherein the buffer size value is equal to a sum of buffer size values within the K buffer size intervals, and K is a positive integer.

16. An information transmission method, applied to a second communication node, comprising:
sending a pre-configured buffer size report related parameter to a first communication node; and
receiving a BSR reported by the first communication node based on the buffer size report related parameter.

17. The method according to claim 16, wherein the buffer size report related parameter comprises at least one of the following: an indication of a used buffer size level table, a BSR reporting type indication, a BSR format indication, and an indication of supporting a specific BSR reporting manner;
the method further comprises:
receiving a service volume information feature of the service to be transmitted indicated by the first communication node or a third communication node, wherein the service volume information feature at least comprises one of the following: a service volume value range; an application layer service type; a buffer size level table expected to be used; an expected BSR reporting type indication; and a BSR format indication expected to be used.

18. The method according to claim 17, wherein the third communication node indicates the second communication node the service volume information feature according to a packet data unit session, a quality of service (QoS) flow or a QoS sub-flow.

19. The method according to claim 17, wherein the second communication node indicates the buffer size report related parameter by using an LC, an LCG, or a DRB as a granularity.

20. The method according to claim 16, wherein a maximum TBS value configured according to an LC, an LCG, or a DRB is sent to the first communication node.

21. The method according to claim 16, wherein the receiving a BSR reported by the first communication node based on the buffer size report related parameter comprises:
a same MAC PDU or a same TTI containing K BSR MAC CEs, wherein
a buffer size value corresponding to one LCG identifier is a sum of buffer size values corresponding to the LCG identifier in the K BSR MAC CEs, K being a positive integer.

22. The method according to claim 16, wherein a minimum TBS value, a maximum TBS value, and a granularity configured according to an LC, an LCG, or a DRB are sent to the first communication node.

23. An information transmission device, comprising: a communication module, a memory, and at least one processor,
wherein the communication module is configured to perform communication interaction with other communication nodes;
the memory is configured to store at least one program; and
the at least one program, when run by the at least one processor, causes the at least one processor to implement the method according to any one of claims 1 to 15 or 16 to 22.

24. A storage medium, wherein the storage medium stores a computer program, and the computer program, when run by a processor, implements the method according to any one of claims 1 to 15 or 16 to 22.
